# EUROPEAN PATENT APPLICATION

(11) **EP 1 995 578 A2**
(43) Date of publication of application: **26.11.2008**
(21) Application number: 08251816.8
(22) Date of filing: 23.05.2008
(51) Int. Cl.: G01K 1/14

(54) **Sensor mounting assembly**

(30) Priority: 25.05.2007 NZ 55538507
(71) Applicant: Senztek Holdings Limited, Auckland, 0600 (NZ)
(72) Inventor: Knolles, Brian Robert, Te Atatu Peninsular, Waitakere (NZ); Allen, Lance James, Henderson, Waitakere (NZ)
(74) Representative: Hallam, Arnold Vincent

(57) **Abstract**

A sensor mounting assembly for a tank wall comprising an inner wall and outer wall having a space therebetween. The sensor mounting assembly includes a conductive central sheath, a flexible outer covering and retaining flange. At least one sensor is mounted within the sheath with the covering surrounding the sheath and the flange being mounted at one end of the sheath such that the sensor and sheath are compressibly mounted between the tank walls. A method of installation of the sensor mounting assembly is also included.

## Description

The invention relates to a sensor mounting assembly for hot-water tanks and to a method of installation. The invention is directed particularly but not solely towards a mounting assembly for thermal sensors for use in tanks, solar water tanks, boiler control systems and air conditioning.

### Background of Invention

Sensors are required for measuring various parameters such as temperature of water in a tank having a double walls made up of an outer skin and inner skin and insulation therebetween. These sensors can be thermal sensors communicatively attached to a controller and to a solar panel whereby in use accurate measurement of the temperature via the sensor can enable more efficient use of power to heat water. Thermal sensors are used to measure water temperatures though heat conductive pipes, tanks or in special sensor pocket and normally comprise a communication cable and elongate conductive end housing the sensor which is sometimes called an 'axial sensor'.

With the increasing use of solar panels there is a need for more accurate measurement of temperatures. This has created a need for mounting the sensor which involves either redesigning the tank during manufacture or in a retrofit. Any redesigning of the tank is expensive and greatly increases the cost of manufacture. To retrofit does not produce a robust and stable mounting that enables accurate readings to be gained.

In this type of retro-fitting, a hole or aperture is cut into the outer skin tank wall. The insulation is then moved or pushed away so that the sensor or axial sensor is laid parallel with the inner wall. To hold the sensor some sort of packing is normally used. This sort of procedure is difficult to do being slow and messy and importantly does not create a stable mounting. Often this installation procedure is not performed by trained people. Poor installation can result in this type of fitting coming loose with the temperatures measurements being inaccurate.

In this specification unless the contrary is expressly stated, where a document, act or item of knowledge is referred to or discussed, this reference or discussion is not an admission that the document, act or item of knowledge or any combination thereof was at the priority date, publicly available, known to the public, part of common general knowledge; or known to be relevant to an attempt to solve any problem with which this specification is concerned.

### Object of the Invention

It is an object of the invention to provide an improved sensor mounting assembly that ameliorates some of the disadvantages and limitations of the known art or at least provide the public with a useful choice.

### Summary of Invention

In a first aspect the invention resides in a sensor mounting assembly for a tank wall comprising an inner wall and outer wall having a space therebetween, the assembly including a conductive central sheath, a flexible outer covering and retaining flange whereby at least one sensor is mounted within the sheath with the covering surrounding the sheath and the flange being mounted at one end of the sheath such that the sensor and sheath are compressibly mounted between the tank walls.

Preferably, the sheath is an elongate tapered member having a distal base end adapted to abut the inner tank wall.
Preferably the assembly includes adjustment means to allow for any variation between tank walls.
Preferably the adjustment means is at least one ring member.
Preferably, the ring member(s) are flexible and can made as separate attachable members or they can be made as part of the flexible covering.
Preferably, the sensor is bonded to the sheath using a thermal paste.
Preferably when assembled the cover, covers the sheath leaving an exposed base end to conductively conduct the tank inner wall via the thermal paste
Preferably the sheath has at least one drainage aperture to allow the paste to exit therefrom and lie between the sheath base and inner tank to wall to bond when assembled.
Preferably, the flange is attached to the outer tank layer to maintain the assembly in a substantially right angle orientation with respect to the tank walls.

In a second aspect the invention resides in a method of installation of the sensor mounting assembly as described for a tank having a casing comprising an inner and outer cylindrical wall and a space therebetween wherein the method includes the following steps:
- cut suitable hole in outer tank wall;
- cut out any insulation material as found within the hole diameter
- insert the sensor, sheath and cover for sizing into the hole;
- add flexible rings onto and over cable between the top of the insulating flexible cover and the retaining flange until the last ring protrudes a few millimetres proud of the outer tank wall surface;
- extract the assembly of the sensor, sheath, cover and rings;
- apply heat transfer paste to exposed sheath base/foot surface that will come into contact with tank inner wall surface;
- insert assembly of the sensor, sheath, cover and;
- secure flange to the outer tank wall surface.

### Brief Description

The invention will now be described, by way of example only, by reference to the accompanying drawings:
**Figure 1** is a side view of the assembly in accordance with a first preferred embodiment of the invention.
**Figure 2** is a right end view of the assembly as shown in figure 1
**Figure 3** is a side view of the inner conduct sheath.
**Figure 4** is an end view of the sheath of figure 3.
**Figure 5** is a side view of the flexible outer covering.
**Figure 6** is a plan view of the covering of figure 5.

### Description of Drawings

The following description will describe the invention in relation to preferred embodiments of the invention, namely a sensor mounting assembly. The invention is in no way limited to these preferred embodiments as they are purely to exemplify the invention only and that possible variations and modifications would be readily apparent without departing from the scope of the invention.

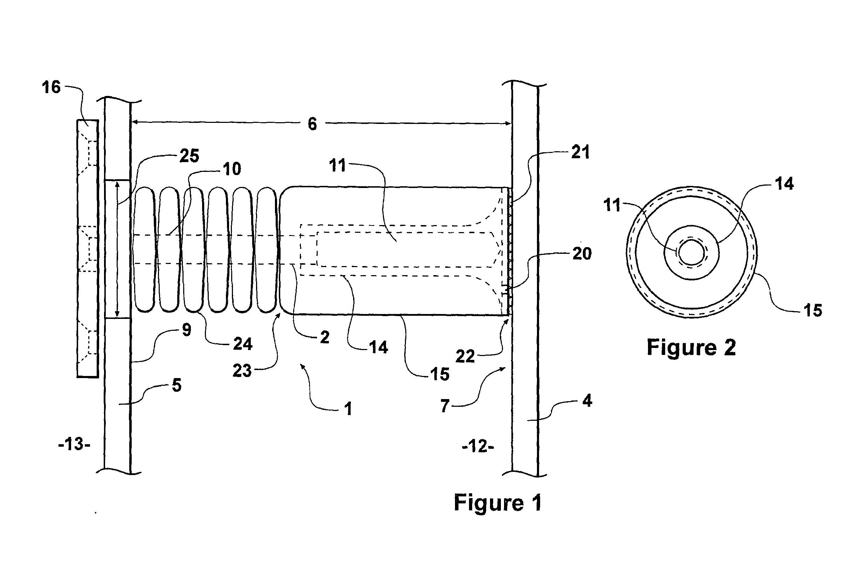

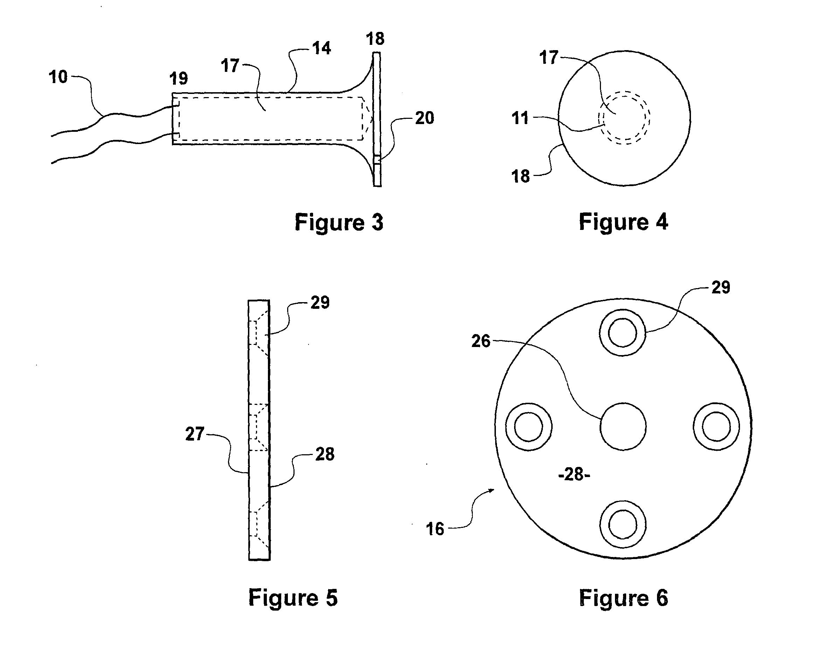

As shown in figure 1 there is the sensor mounting assembly 1 for use with at least one sensor 2 for use with a water tank, and said sensor being operatively connected to a controller (not shown). The water tank comprises a cylindrical casing which includes an inner wall 4 and an outer wall 5 with a space 6 therebetween for insulation. Inner wall 4 has an inner surface 7 within space 6 and outer wall 5 has an inner surface 9 being defined as being located within the wall space 6 and facing inner wall surface 7. As shown in figures 1 and 3 sensor 2 includes a communication means 10 operatively attached to a sensor 11.

Assembly 1 is generally elongate in shape having a distal end 12 being adjacent in use to the tank inner wall 5 and proximal end 13. Assembly 1 includes a conductive sheath member 14, an outer covering member 15 and flange member 16.

As shown in figure 1 sheath member 14 comprises a generally elongate tapered shape with a recess 17 therein, a distal end 18 and proximal end 19. The terms 'distal' and 'proximal' are defined with respect to the outer tank wall 5. Distal end 18 being the base or foot of the sheath member 14, is substantially planar shaped to match and abut the wall inner surface 7. Sheath member 14 can be fabricated from any conductive materials such as for example copper which allows for the thermal conductivity of heat of the water contents in the tank to travel or be felt through the tank inner wall to the inner surafeace7. Sheath recess 17 is adapted to allow a sensor 11 to be inserted and conductively connected therewith.

Sheath member 14 can have at least one drainage aperture 20 at the base 18 to allow a thermal paste or heat transfer paste 21 to be injected into the recess 17 of the sheath member 14 and exit therefrom and to additionally thermally bond and or stabilize the sheath base 18 to the inner tank wall 7 and the sensor to the sheath member14. The paste should be conductive as well having some adhesive properties according to the materials type being in contact therewith. As shown in the drawing when assembled the cover being tubular member fits over the sheath leaving an exposed base immediately adjacent to the inner tank wall 7. The paste can leave a portion of itself within the recess 17 and a portion to lie between the exposed sheath base or foot and the inner tank wall. The paste is also useful in allowing for any curvature or different tank shapes or irregularities.

The base of sheath member 14 can be planar as stated but can also be any shape that mirrors or is substantially parallel to the inner surface 7 of the tank. This matching or near matching of surfaces better enables the fixing or stability of the assembly 1. Sheath member 14 is dimensioned in length to be commensurate with the sensor 11 length whereby the sensor length is less than the length of the sheath member 14 as seen in figure 3 so allowing for any crimping or fixing of the sheath member 14 at a proximal end (or the end closest to the outer tank wall inner surface 9) to the sensor to further stabilize the mounting. Sheath member is tapered in shape to better allow conduction of sufficient heat to the sensor11 and yet retains a low thermal inertia.

Cover 15 is a flexible cover which in use is fitted over the sheath member 14 to provide an insulation layer over the heat conducting sheath member 14 for greater accuracy in sensing and also restricts any lateral movement during mounting and provides some axial force to hold the sheath 14 against the flange 16 and inner surface 9 of the tank to thereby maintain the assembly in a sub right angle relationship to the tank wall surfaces 7&9.

Cover 15 can be moulded from a silicon compound or similar insulating flexible material and is shaped as a tubular sleeve having a distal end 22 and proximal end 23. At proximal end 23 there is an adjustment means 24 which can include a series of layered compression rings 24 being removably attached to each other and or to the proximal end 23, to allow selective removal depending on the space 6 dimension between the tank walls 4 & 5. Alternatively adjustment means 24 can include at least one separate ring member having a split therein to allow insertion of the ring over communication means 10. The use of the ring(s) allow for continuity of compression with variable depths of insulation on different tanks.

In use flange 16 is selected as being ring shaped (though any shape is possible) and dimensioned to fit over an aperture 25 of outer tank wall 5 as drilled therein to allow for the insertion of the sensor. Flange 16 has a central aperture 26 for the passage of the communication means 10 there-through. Flange 16 has an inner surface 27 and an outer surface 28. Flange 16 also has holding or fastening means 29 as shown in figures 5 and 6 which are apertures to allow in combination the fastening of the flange 16 to the outer tank wall 5 and compressibly hold the rings 24 and cover 15 to the inner tank surface 7. In use the sensor cable 10 is able to pass through the flange aperture 26.

Flange 16 can be fabricated from any suitable material such as for example plastics or metal. As shown flange 16 can have holes 30 for screw fastening to the outer tank wall 4 though any other fastening is equally possible such as for example clipping in or by having a protruding portion facing in use adjacent means 24 to further push the rings and cover towards inner wall surface 7.

The sheath 14 must be conductive and provide some stability and strength to the contact points or surfaces when in use but it should not be so large as to dissipate any thermal measurement be felt and used by the sensor. The tubular shape of the cover 15 though not shown can have a cupped or inwardly curved end to allow a better fit over the sheath. The sheath is designed to be insulative to not effect or distort any thermal readings so can not be too thick or too thin and yet provide strength to allow some compression and stability to the assembly to enable accurate readings to be provide. The rings are also need to be flexible and insulative and possess similar physical characteristics to the cover 15 though they might be of a different material if necessary.

In use for example sensor 2 comprising a sensor 11 and communication means 10, is attached within the sheath 14 with a paste or thermal paste 21 and by crimping. The sensor 2 and sheath 14 are then in turn covered by cover 15 and held frictionally together. An aperture 24 is drilled or already has been drilled in the tank outer wall 5 to allow the sensor, sheath 14 and cover 15 to be inserted or pushed in until the distal surface of the sheath 14 abuts with the inner surface 7 of the inner wall 4 to better maintain conductive contact therewith.

The length is then checked to make sure that the sheath 14 & cover 15 and adjustment means 24 are sized to protrude outwardly of the aperture 25 of inner tank wall 5. One or more rings 24 can be removed or added as appropriate. Flange 16 is then fitted to sufficiently compress the rings 24 and the cover 15 so that the base of the copper sheath 14 remains in contact with the tank inner wall surface 7. The flange 16 is then screwed to the outer tank wall surface 8.

In summary a typical installation procedure could be:
- cut suitable hole in outer tank wall;
- cut out any insulation material as found within the hole diameter
- insert the sensor, sheath and cover for sizing into the hole;
- add flexible rings onto and over cable 10 between the top of the insulating flexible cover 15 and the retaining flange 16 until the last ring protrudes a few mm proud of the outer tank wall surface;
- extract the assembly of the sensor, sheath, cover and rings;
- apply heat transfer paste to exposed sheath base/foot surface that will come into contact with tank inner wall surface 7;
- insert assembly of the sensor, sheath, cover and;
- secure flange 16 to outer tank wall surface.

Other variations of these steps are also envisaged such as for example:
- apply paste to the sensor;
- insert sensor into the sheath;
- cut or drill a hole or an aperture in the outer tank wall;
- insert the sensor and sheath into the cover;
- insert the sensor, sheath and cover through the aperture;
- adjust the cover to allow insertion in the space between casing walls and to abut the inner wall;
- attach the flange to the outer tank layer to affix assembly to the casing walls.

### Advantages

a) Stable mounting
b) More accurate sensing
c) Modest manufacturing cost
d) Simple installation
e) Retrofitting is possible
f) Able to be fitted to most tank types
g) Adjustable fitting
h) Rapid installation
i) Allows for accurate sensor readings

### Variations

Throughout the description of this specification, the word "comprise" and variations of that word such as "comprising" and "comprises", are not intended to exclude other additives, components, integers or steps.

More than one sensor may be used per assembly. A typical sensor may be 30mm long x 6mm diameter but equally other dimensions are also possible. Though this asasembly can be used for retrofitting it is also possible to used during the manufacture of any tanks. Instead of copper one can use .... The cover can be made from any other flexible materials such as rubber. The flange 16 can by any shape that allows both fixing to the outer tank wall surface and allow compression of the cover. Alternatively the adjustment and compression of the rings 24 and/or cover 15 can be replace with some form of biasing means such as a spring which should be insulative.

It will of course be realised that while the foregoing has been given by way of illustrative example of this invention, all such and other modifications and variations thereto as would be apparent to persons skilled in the art are deemed to fall within the broad scope and ambit of this invention as is hereinbefore described.

To those skilled in the art to which the invention relates, many changes in construction and widely differing embodiments and application of the invention will suggest themselves without departing from the scope of the invention as defined in the appended claims. The disclosures and the descriptions herein are purely illustrative and are not intended to be limiting.

## Claims

1. A sensor mounting assembly for a tank wall comprising an inner wall and outer wall having a space therebetween, the assembly including a conductive central sheath, a flexible outer covering and retaining flange whereby at least one sensor is mounted within the sheath with the covering surrounding the sheath and the flange being mounted at one end of the sheath such that the sensor and sheath are compressibly mounted between the tank walls.

2. A sensor mounting assembly as claimed in claim 1 wherein, the sheath is an elongate tapered member having a distal base end adapted to abut the inner tank wall.

3. A sensor mounting assembly as claimed in claim 2 wherein the assembly includes adjustment means to allow for any variation between tank walls.

4. A sensor mounting assembly as claimed in claim 3 wherein the adjustment means is at least one ring member.

5. A sensor mounting assembly as claimed in claim 4 wherein the ring member(s) are flexible and can be made as separate attachable members or they can be made as part of the flexible covering.

6. A sensor mounting assembly as claimed in claim 5 wherein the sensor is bonded to the sheath using a thermal paste.

7. A sensor mounting assembly as claimed in claim 6 wherein when assembled the cover, covers the sheath leaving an exposed base end to conductively conduct the tank inner wall via the thermal paste.

8. A sensor mounting assembly as claimed in claim 7 wherein the sheath has at least one drainage aperture to allow the paste to exit therefrom and lie between the sheath base and inner tank to wall to bond when assembled.

9. A sensor mounting assembly as claimed in claim 8 wherein the flange is attached to the outer tank layer to maintain the assembly in a substantially right angle orientation with respect to the tank walls.

10. A method of installation of the sensor mounting assembly as claimed in claim 1 for a tank having a casing comprising an inner and outer cylindrical wall and a space therebetween wherein the method includes the following steps:
- cutting suitable hole in outer tank wall;
- cutting out any insulation material as found within the hole diameter
- inserting the sensor, sheath and cover for sizing into the hole;
- adding flexible rings onto and over cable between the top of the insulating flexible cover and the retaining flange until the last ring protrudes a few mm proud of the outer tank wall surface;
- extracting the assembly of the sensor, sheath, cover and rings;
- applying heat transfer paste to exposed sheath base/foot surface that will come into contact with tank inner wall surface;
- inserting assembly of the sensor, sheath, cover and;
- securing the flange to the outer tank wall surface.

11. A sensor mounting assembly substantially as herein before described with reference to the accompanying drawings.

12. A method of installation of the sensor mounting assembly substantially as herein before described with reference to the accompanying drawings.
